# EUROPÄISCHE PATENTANMELDUNG

(11) **EP 1 361 237 A1**
(43) Veröffentlichungstag der Anmeldung: **12.11.2003**
(21) Anmeldenummer: 03010084.6
(22) Anmeldetag: 03.05.2003
(51) Int. Cl.: C08G 18/32, C08G 18/75, C08L 67/00, C08L 101/00

(54) **Zubereitung aus Polymeren und Duroplasten**

(30) Priorität: 10.05.2002 DE 10221051
(71) Anmelder: Degussa AG, 40474 Düsseldorf (DE)
(72) Erfinder: Weiss, Jörn Volker, Dr., 45721 Haltern am See (DE); Grenda, Werner, 44627 Herne (DE)

(57) **Zusammenfassung**

Die Erfindung betrifft eine polymere Zusammensetzung enthaltend ein Polymer und ein Duroplast, wobei der Duroplast in der Polymermatrix aus seinen entsprechenden Ausgangskomponenten hergestellt wurde.

## Beschreibung

Die Erfindung betrifft eine polymere Zusammensetzung enthaltend ein Polymer und ein Duroplast, wobei der Duroplast in der Polymermatrix aus seinen entsprechenden Ausgangskomponenten hergestellt wurde.

Polymer-Blends (PB) sind Mischungen aus zwei oder mehr Polymeren bzw. Copolymeren. Diese werden hergestellt, um die Eigenschaften eines Basis-Polymeren zu verbessern. PB werden eingeteilt in homologe (HPB), mischbare (MPB), nicht-mischbare und verträgliche Produkte sowie Polymerlegierungen. HPB sind Mischungen, die aus zwei chemischen identischen Polymeren bestehen, die sich lediglich in ihren Molmassenverteilungen unterscheiden. Derartige Mischungen sind stets homogen, die Mischung ist thermodynamisch stabil. MPB sind dagegen Mischungen chemisch unterschiedlich aufgebauter Polymere, die aber dennoch thermodynamisch stabil sind. Dieser recht seltene Fall tritt z. B. dann auf, wenn die Segmente der zu mischenden Makromoleküle miteinander spezifisch attraktive Wechselwirkungen eingehen (z. B. Wasserstoffbrücken, Dipol-Dipol- oder Ion-Dipol-Wechselwirkungen). Die weitaus meisten chemisch unterschiedlichen Polymere sind von einem recht niedrigen Polymerisationsgrad aufwärts unverträglich und ihre Unverträglichkeit steigt mit wachsender Kettenlänge immer weiter, wie sich anhand statistischthermodynamischer Überlegungen und experimenteller Befunde zeigen lässt. Hier entscheidet vor allem die Zusammensetzung und Vorbehandlung der PB darüber, ob sie verträglich erscheinen. War nach dem Durchmischungsvorgang genügend Kettenbeweglichkeit und Zeit gegeben, dass sich größere phasengetrennte Bereiche ausbilden konnten, ist dies meist an einer Trübung des Materials festzustellen. Als verträgliche PB werden dann im Allgemeinen solche Produkte bezeichnet, die bei Betrachtung mit dem bloßen Auge als homogen erscheinen und deren physikalische Eigenschaften denen der Mischungskomponenten überlegen sind.

Durch Modifizierung eines Polymeren A durch Aufpfropfen geringer Anteile eines Polymeren B kann eine verbesserte Verträglichkeit der Polymeren A und B erreicht werden, ebenso durch Zugabe von AB-Blockcopolymeren. Pfropf- bzw. Blockcopolymere bilden in diesem System die Grenze zwischen A- u. B-Phasen und verhaften diese so miteinander. In diesen Fällen spricht man von Polymerlegierungen. Verträglichkeit kann auch durch Zusatz bestimmter Additive bewirkt werden. Andererseits ist durchaus nicht immer eine möglichst homogene Mischbarkeit erwünscht. So ist die Schlagzäh-Modifizierung von Polymeren wie dem Polystyrol oder die Herstellung thermoplastischer Elastomerer ohne Phasentrennung nicht denkbar. Wirtschaftlich spielen PB eine sehr bedeutende Rolle (Römpp Lexikon Chemie - Version 2.0, Stuttgart/New York: Georg Thieme Verlag 1999).

Lack-Polyesterharze tragen als funktionelle Gruppe häufig Hydroxyl-Gruppen. Zur Anwendung kommen flüssige wie auch feste Produkte. Ein Hauptanwendungsgebiet für diese Harze besteht in der Herstellung von Lacken und Beschichtungsstoffen die ebenfalls flüssig (z. B. Coil Coating Lacke) oder auch fest (Pulverlacke) sein können. Mit entsprechenden Härtern, die mit den OH-Gruppen (z. B. Polyisocyanate) abreagieren können, werden die Polyesterharze nach Applikation auf einem Substrat in der Regel bei erhöhter Temperatur zu einem dauerhaften und strapazierfähigen Beschichtungsfilm ausgehärtet.

Duroplaste sind Kunststoffe, die durch irreversible und enge Vernetzung über kovalente Bindungen aus Oligomeren (techn.: Präpolymeren), seltener aus Monomeren oder Polymeren entstehen. Das Wort "Duroplaste" wird dabei sowohl für die Rohstoffe vor der Vernetzung (s. Reaktionsharze) als auch als Sammelbezeichnung für die ausgehärteten, zumeist vollständig amorphen Harze verwendet. Duroplaste sind bei niedrigen Temperaturen Stahl-elastisch, und auch bei höheren Temperaturen können sie nicht viskos fließen, sondern verhalten sich bei sehr begrenzter Deformierbarkeit elastisch (Römpp Lexikon Chemie - Version 2.0, Stuttgart/New York: Georg Thieme Verlag 1999).

Die Zubereitung einer physikalischen Mischung aus Polymeren und speziell aus Polyesterharz und Duroplast könnte nun derart erfolgen, dass man den ausgehärteten Duroplast unter Aufwendung erheblicher mechanischer Energie vermahlt und anschließend das Mahlgut in den flüssigen bzw. geschmolzenen Polyester einarbeitet (z. B. mit Hilfe eines Rührkessels oder Extruders). Eine wirklich homogene Verteilung des Duroplasten im Polyester bis hinein in den molokularen Bereich wird dadurch natürlich nicht erreicht, da aufgrund der maximal erreichbaren Feinheit des Mahlgutes reale Grenzen für die Verteilung zwischen Polyester und Duroplast gesetzt sind.

Überraschenderweise wurde nun gefunden, dass eine optimale Verteilung des Duroplasten in Polymeren und speziell in Polyestern dadurch gelingt, dass der Duroplast erst im Polymer bzw. Polyester hergestellt wird. Dazu werden die entsprechenden Monomere, Oligomere und/oder Präpolymere im Polymer/Polyester gelöst und anschließend zur Reaktion gebracht.

Gegenstand der Erfindung sind polymere Zusammensetzungen, im Wesentlichen enthaltend
A) mindestens ein Polymer
B) mindestens ein Duroplast in Mengen von 0,5 bis 50 Gew.-%, bezogen auf die Summe von A und B,
   hergestellt durch Reaktion in der Polymermatrix A aus
   1. mindestens einer Ausgangskomponente mit NH₂-Gruppen
      und
   2. mindestens einer Ausgangskomponente mit NCO-Gruppen,
wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist.

In einer bevorzugten Ausführungsform ist der Gegenstand der Erfindung eine polymere Zusammensetzung, im Wesentlichen enthaltend
A) mindestens ein OH-Gruppen aufweisendes Polymer, bevorzugt ein Polyester, mit einer OH-Funktionalität von ≥ 2
B) mindestens ein Duroplast in Mengen von 0,5 bis 50 Gew.-%, bezogen auf die Summe von A und B,
   hergestellt durch Reaktion in der Polymermatrix A aus
   1) mindestens einer Ausgangskomponente mit NH₂-Gruppen
      und
   2) mindestens einer Ausgangskomponente mit NCO-Gruppen,
wobei B1 und B2 gleichzeitig und unabhängig eine Funktionalität von ≥ 2 aufweisen und mindestens eine Ausgangskomponente mit einer Funktionalität von >2 in Mengen von 0,5 bis 100 Gew.-% vorhanden ist.

Bei Duroplastgehalten von 0,5 bis 50 Gew.-%, bevorzugt von 2 bis zu 40 Gew.-%, werden homogene Duroplast/Polymer-Zusammensetzungen erhalten, die andere physikalische Eigenschaften (Schmelzbereich, Tg, Schmelzviskosität) aufweisen, als die separat vorliegenden, physikalisch gemischten Stoffe. Die chemische Reaktivität des an der Polymerisationsreaktion nicht teilnehmenden Polymers bleibt dagegen erhalten. Die resultierende polymere Zusammensetzung kann dann wie das Basispolymer weiter verarbeitet werden.

Als Polymere A sind prinzipiell alle bekannten geeignet wie z. B. Polyolefine, Polybutadiene, Polystyrole, Polysiloxane, Polyamide, soweit sie einen Schmelzpunkt von nicht höher als 220 °C besitzen. Auch Copolymere und Blockpolymerisate eignen sich als Polymer A, wie z. B. Styrol-Dien-Polymerisate.

Als Polymere mit einer Funktionalität von mindestens 2 eignen sich allgemein alle Polymere, die derartige Funktionen aufweisen, insbesondere jedoch hydroxylgruppenaufweisende Polyester und Polyacrylate.

Die bevorzugt eingesetzten hydroxylgruppenhaltigen Polyester werden hergestellt durch Polykondensation von geeigneten Di- und/oder Polycarbonsäuren, -estern und/oder Anhydriden und Di- und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propan-diol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylen-glykol und Hydroxypivalinsäureneopentylglykolester, infrage. Bevorzugt sind Monoethylenglykol, Neopentylglykol, Dicidol, Cyclohexandimethanol, Trimethylolpropan und Glycerin.

So hergestellte amorphe Polyester haben bevorzugt eine OH-Zahl von 15 - 200 mg KOH/g, einen Tg von 35 - 85 °C, einen Schmelzbereich von 60 bis 110 °C und eine Säurezahl von < 10 mg KOH/g. Die Molmassen betragen bevorzugt 2000 bis 7000.

Entsprechend hergestellte (semi)kristalline Polyester haben eine OH-Zahl von 15 bis 130 mg KOH/g, eine Tg von -50 bis 40 °C, einen Schmelzbereich von 60 bis 130 °C und eine Säurezahl von < 8 mg KOH/g. Die Molmassen betragen bevorzugt 1800 bis 6500.

Die bevorzugt eingesetzten hydroxylgruppenhaltigen Acrylate mit einer OH-Zahl von 20 bis 150 mg/KOH, einer Molmasse von 1800 bis 6000 und einem Tg von 30 bis 90 °C werden hergestellt durch Polyaddition geeigneter ethylenisch ungesättigter Monomere. Beispiele für solche Verbindungen sind Styrol, α-Methylstyrol, C₂ - C₄₀-Alkylester der Acrylsäure oder C₁bis C₄₀-Alkylester der Methacrylsäure, wie Methylmethacrylat, Ethylacrylat, Propylmethacrylat, Isopropylacrylat, n-Butylmethycrylat, Isobuthylacrylat, tert.-Buthylmethacrylat, Pentylmethacrylat, n-Hexylmethacrylat, n-Heptylmethacrylat, n-Octylacrylat, 2-Ethylhexylacrylat, Decylmethacrylat, Laurylmethacrylat, Palmithylmethacrylat, Phenoxyethylmethacrylat, Phenylmethacrylat, Cyclohexymethacrylat, tert.-Butylcyclohexylacrylat, Buthylcyclohexylmethacrylat, Trimethylcyclohexylmethacrylat. Hydroxyalkyylester, α, β-ungesättigter Carbonsäuren wie der Acrylsäure und/oder Methacrylsäure mit einer primären OH-Gruppe und einem C₅ - C₁₈-Hydroxyalkylrest gehören ebenfalls zu dieser Gruppe, wie z. B. Hydroxyhexylacrylat, Hydroxyoctoylacrylat und die entsprechenden Methacrylate und Umsetzungsprodukte von Hydroxyethyl(meth)acrylat mit Caprolacton, sowie Monomere mit sekundären OH-Funktionen, wie Addukte aus Glycidyl(meth)acrylat und gesättigten kurzkettigen Säuren mit C₁ - C₃-Alkylresten, z. B: Essigsäure oder Propionsäure.

Erfindungsgemäß wird der Duroplast B in der Polymermatrix A aus seinen Ausgangskomponenten hergestellt. Die Ausgangskomponenten B1 und B2 weisen eine Funktionalität von mindestens 2,0 auf, wobei immer eine Ausgangskomponente mit einer Funktionalität von größer zwei in Mengen von 0,5 bis 100 Gew.-%, bezogen auf die Komponente B, in der Komponente B vorhanden sein muss. Prinzipiell ist es unerheblich, ob die Aminokomponente oder die Isocyanatkomponente die Funktionalität von mehr als zwei aufweist, bevorzugt wird jedoch die Isocyanatkomponente verwendet. Die ungefähren Molmassen der Duroplasten variieren von 2000 bis 70000, bevorzugt größer 4000.

Im Allgemeinen sind die Duroplaste B in Mengen von 0,5 bis 50 Gew.-%, besonders bevorzugt von 2 bis 30 Gew.-%, bezogen auf die polymere Zusammensetzung, in der Zusammensetzung enthalten.

Zur Herstellung der Duroplaste können als Komponente B2 alle bekannten aliphatischen, cycloaliphatischen, araliphatischen sowie aromatischen Isocyanate und deren Isocyanurate, falls zugänglich, in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate wie Hexamethylendiisocyanat (HDI) oder 1,5-Diisocyanato-2-methylpentan (MPDI), Heptandiisocyanate, Octandiisocyanate, Nonandiisocyanate wie 1,6-Diisocyanato-2,4,4-trimethylhexan oder 1,6-Diisocyanato-2,2,4-trimethylhexan (TMDI), Nonantriisocyanate (z. B. 4-Isocyanatomethyl-1,8-octandiisocyanat (TIN)), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI , 1,3- und 1,4- H₆-XDI, NBDI sowie Mischungen aus HDI und IPDI eingesetzt. Bevorzugte Polyharnstoffe im Rahmen der Erfindung sind solche, die aus IPDI, IPDI-Isocyanurat, HDI oder HDI-Isocyanurat und beliebigen Gemischen daraus bestehen.

Im Rahmen der Erfindung können als Komponente B1 alle aliphatischen, (cyclo)aliphatischen, cycloaliphatischen und aromatischen Diamine und/oder Polyamine (C₅ - C₁₈) eingesetzt werden.

Als Diamine sind prinzipiell 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, geeignet.

Auch Mischungen der genannten Diamine sind verwendbar. Bevorzugt wird Isophorondiamin eingesetzt.

Polyamine mit mehr als 2 NH-Gruppen sind ebenfalls geeignet, wie z. B. 4-Aminomethyl-1,8-octandiamin, Diethylentriamin, Dipropylentriamin und Tetraethylenpentamin.

Im Allgemeinen werden Duroplaste mit einem NCO/NH₂-Verhältnis von 0,8 bis 1,2 zu 1 hergestellt. Bei Einsatz äquimolarer Mengen mit einem NCO/NH₂-Verhältnis von 1 zu 1 werden unendlich vernetzte, feste und spröde Duroplasten in den Polymeren erhalten.

Bevorzugte Duroplaste im Rahmen der Erfindung sind solche, die aus IPD und IPDI, und/oder IPDI-Isocyanurat und/oder HDI und/oder HDI-Isocyanurat bestehen. Diese weisen Molmassen von mehr als 4000 auf und enthalten mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat. Auch Polyharnstoffe aus reinen Isocyanuraten und IPD sind bevorzugt.

In einer bevorzugten Ausführungsform der Erfindung sind 3 bis 20 Gew.-%, besonders bevorzugt 4, 5, 6, 7, 8, 9, 10, 11, 12, 13, 14, 15, 16, 17, 18, 19 Gew.-% Duroplast in der polymeren Zusammensetzung, insbesondere im OH-haltigen Polyester und Acrylat enthalten.

### Allgemeine Herstellung der erfindungsgemäßen Zusammensetzungen:

In einem beheizbaren 2-Liter-Dreihalskolben, ausgerüstet mit mechanischem Rührer und zwei Tropftrichtern wird das zu modifizierende Polymer vorgelegt und auf eine Temperatur erwärmt, die oberhalb seiner Schmelztemperatur liegt. Die zur Bildung des Duroplasten notwendigen Monomere/Oligomere werden jeweils in den entsprechenden Tropftrichter eingefüllt.

Nach Erreichen der gewünschten Reaktionstemperatur werden die Reaktionspartner im gewählten Molverhältnis gleichmäßig dem flüssigen Polymer unter Rühren innerhalb von 5 - 30 Min. zudosiert. Nach erfolgter Zugabe wird das Reaktionsgemisch weitere 5 - 90 Min. bei 180 - 210 °C gerührt.

Die Durchführung der Reaktion erfolgt bevorzugt unter Schutzgasatmosphäre (z. B. Stickstoff).

Das erhaltene Reaktionsgemisch wird zur weiteren Aufarbeitung in heißer noch flüssiger Form aus dem Reaktionskolben in eine Metallschale gegeben, worin es abkühlt und zu einem Festprodukt erstarrt. Das so erhaltene Produkt kann durch weitere mechanische Operationen wie z. B. Brechen oder Mahlen, entsprechend seiner Weiterverwendung konfektioniert werden.

Nachfolgend wird der Gegenstand der Erfindung anhand von Beispielen erläutert.

| **Beispiele 1 bis 4: Mit Polyharnstoff modifizierte Polyester und Polyacrylate** | | | | |
|---|---|---|---|---|
| **Beispiel** | **1** | **2** | **3** | **4** |
| DYNACOLL 7390¹ | 720 | 680 | - | - |
| URALAC 1580² | - | - | 760 | - |
| JOHNCYRL 587³ | - | - | | 720 |
| VESTAMIN IPD⁴ | 30 | 60 | 15 | 30 |
| IPDI/T 1890⁵ | 50 | - | 25 | 50 |
| HDI-Isocyanurat⁶ | - | 60 | - | - |

| | | | | |
|---|---|---|---|---|
| (Alle Angaben in Gewichtsteilen). 1. Kristalliner Polyester, OH-Zahl ca. 30 mg KOH/g, Schmelzpunkt 115 °C, Molmasse ca. 3500, Produkt der Degussa AG | | | | |
| 2. Amorpher Polyester, OH-Zahl ca. 82 mg KOH/g, Tg ca. 51 °C, Produkt der DSM | | | | |
| 3. Polyacrylat, OH-Zahl ca. 75 mg KOH/g, Produkt der SC Johnson Corp., USA | | | | |
| 4. Isophorondiamin, H-aktiv Äquivalentgewicht 42,6 g/val, Produkt der Degussa AG | | | | |
| 5. 1 : 1 Mischung (Gewichtsteile) aus: VESTANAT IPDI (Isophorondiisocyanat, NCO-Gehalt: 37,5 %) und VESTANAT T 1890 (Isophorondiisocyanurat, NCO-Gehalt: 18, 8 %), Degussa Produkte | | | | |
| 6. DESMODUR N 3300 (Hexamethylendiisocyanurat, NCO-Gehalt: 21,6 % , Bayer AG | | | | |

### Beispiel 1

In einer wie oben beschriebenen Apparatur werden 720 g des Polyesters DYNACOLL 7390 vorgelegt und unter Wärmezufuhr innerhalb von 45 Min. aufgeschmolzen und unter Rühren auf eine Temperatur von 180 °C erwärmt. Die beiden Ausgangskomponenten für die Duroplastherstellung, 30 g VESTAMIN IPD und 50 g Iso-cyanatmischung (Lösung aus 25 g VESTANAT T 1890 (IPDI-Isocyanurat) und 25 g VESTANAT IPDI), jeweils vorgelegt in einem Tropftrichter, werden gleichmäßig innerhalb von 15 Min. zu der 180 °C heißen Polyesterschmelze zugetropft. Dass so entstandene Reaktionsgemisch lässt man weitere 20 Min. bei einer Temperatur von 180 - 190 °C nachreagieren. Danach wird die heiße viskose Reaktionsmischung in eine Metall-Schale überführt und auf Raumtemperatur abgekühlt. Es entsteht ein harzartiges, festes, sprödes und klebfreies Produkt.

Beispiele 2 bis 4 werden analog durchgeführt.

## Patentansprüche

1. Polymere Zusammensetzung, im Wesentlichen enthaltend
A) mindestens ein Polymer,
B) mindestens ein Duroplast in Mengen von 0,5 bis 50 Gew.-%, bezogen auf die Summe von A und B,
hergestellt durch Reaktion in der Polymermatrix A aus
1) mindestens einer Ausgangskomponente mit NH₂-Gruppen
und
2) mindestens einer Ausgangskomponente mit NCO-Gruppen,
wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist.

2. Polymere Zusammensetzung nach Anspruch 1, im Wesentlichen enthaltend
A) mindestens ein Polymer mit einer Funktionalität von ≥ 2,
B) mindestens ein Duroplast in Mengen von 0,5 bis 50 Gew.-%, bezogen auf die Summe von A und B,
hergestellt durch Reaktion in der Polymermatrix A aus
1) mindestens einer Ausgangskomponente mit NH₂-Gruppen
und
2) mindestens einer Ausgangskomponente mit NCO-Gruppen,
wobei B1 und B2 gleichzeitig und unabhängig eine Funktionalität von ≥ 2 aufweisen und mindestens eine Ausgangskomponente mit einer Funktionalität von > 2 in Mengen von 0,5 bis 100 Gew.-% vorhanden ist.

3. Polymere Zusammensetzung nach Anspruch 2, im Wesentlichen enthaltend
A) mindestens ein OH-Gruppen aufweisendes Polymer mit einer OH-Funktionalität von ≥ 2,
B) mindestens ein Duroplast in Mengen von 0,5 bis 50 Gew.-%, bezogen auf die Summe von A und B,
hergestellt durch Reaktion in der Polymermatrix A aus
1) mindestens einer Ausgangskomponente mit NH₂-Gruppen
und
2) mindestens einer Ausgangskomponente mit NCO-Gruppen,
wobei B1 und B2 gleichzeitig und unabhängig eine Funktionalität von ≥ 2 aufweisen und mindestens eine Ausgangskomponente mit einer Funktionalität von > 2 in Mengen von 0,5 bis 100 Gew.-% vorhanden ist.

4. Polymere Zusammensetzung nach Anspruch 1,
**dadurch gekennzeichnet,**
**dass** als Polymere A Polyolefine, Polybutadiene, Polystyrole, Polysiloxane, Polyamide allein oder in Mischungen eingesetzt werden.

5. Polymere Zusammensetzung nach Anspruch 3,
**dadurch gekennzeichnet,**
**dass** als Polymer A OH-Gruppen aufweisende Polyester und/oder Polyacrylate eingesetzt werden.

6. Polymere Zusammensetzung nach Anspruch 5,
**dadurch gekennzeichnet,**
**dass** amorphe und/oder (semi)kristalline Polyester eingesetzt werden.

7. Polymere Zusammensetzung nach Anspruch 6,
**dadurch gekennzeichnet,**
**dass** amorphe Polyester mit einem Tg von 35 bis 85 °C, einem Schmelzbereich von 60 bis 110 °C, einer Molmasse von 2000 bis 7000 und einer OH-Zahl von 15 bis 200 mg KOH/g eingesetzt werden.

8. Polymere Zusammensetzung nach Anspruch 6,
**dadurch gekennzeichnet, dass** (semi)kristalline Polyester mit einem Tg von -50 bis 40 °C, einem Schmelzbereich von 60 bis 130 °C, einer Molmasse von 1800 bis 6500 und einer OH-Zahl von 15 bis 130 mg KOH/g eingesetzt werden.

9. Polymere Zusammensetzung nach Anspruch 6 bis 8,
**dadurch gekennzeichnet,**
**dass** OH-gruppenhaltige Polyester, aufgebaut aus den Ausgangskomponenten Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure und/oder - soweit zugänglich - deren Anhydride und/oder Ester eingesetzt werden.

10. Polymere Zusammensetzung nach Anspruch 6 bis 9,
**dadurch gekennzeichnet, dass** OH-gruppenhaltige Polyester, aufgebaut aus den Diolen und/oder Polyolen Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propan-diol-1,3, 2-Methyl-pentandiol-1,5, 2,2,4(2,4,4)-Trimethylhexandiol-1,6, Glycerin, Trimethyl-olpropan, Trimethylolethan, Hexantriol-1,2,6, Butantriol-1,2,4, Tris-(β-hydroxyethyl)-isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylen-glykol und/oder Hydroxypivalinsäureneopentylglykolester eingesetzt werden.

11. Polymere Zusammensetzung nach Anspruch 5,
**dadurch gekennzeichnet,**
**dass** OH-gruppenhaltige Polyacrylate mit einer OH-Zahl von 20 bis 150 mg KOH/g, einer Molmasse von 1800 bis 6000 und einem Tg von 30 bis 90 °C eingesetzt werden.

12. Polymere Zusammensetzung nach mindestens einem der vorherigen Ansprüche,
**dadurch gekennzeichnet,**
**dass** als Komponente B1 aliphatische, cycloaliphatische, araliphatische und/oder aromatische Isocyanate und/oder Isocyanurate eingesetzt werden.

13. Polymere Zusammensetzung nach Anspruch 12,
**dadurch gekennzeichnet,**
**dass** Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiidocyanate, Pentandiisocyanate, Hexandiisocyanate, wie Hexamethylendiisocyanat (HDI) oder 1,5-Diisocyanato-2-methylpentan (MPDI), Heptandiisocyanate, Octandiisocyanate, Nonandiisocyanate, wie 1,6-Diisocyanato-2-4-4-trimethylhexan oder 1,6-Diisocyanato-2,2,4-trimethylhexan (TMDI), Nonantriisocyanate, wie 4-Isocyanatomethy-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), oder deren Isocyanurate soweit zugänglich, allein oder in Mischungen eingesetzt werden.

14. Polymere Zusammensetzung nach Anspruch 12,
**dadurch gekennzeichnet,**
**dass** Isophorondiisocyanat (IPDI) und/oder Hexamethylendiisocyanat (HDI) und/oder deren Isocyanurate eingesetzt werden.

15. Polymere Zusammensetzung nach mindestens einem der vorherigen Ansprüche,
**dadurch gekennzeichnet,**
**dass** als Komponente B2 aliphatische, cycloaliphatische, araliphatische und/oder aromatische Diamine eingesetzt werden.

16. Polymere Zusammensetzung nach Anspruch 15,
**dadurch gekennzeichnet,**
**dass** als Diamine 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin (IPD), 4,7-Dioxadecan-1,10-diamin, N-(2-Aminoethyl)-1,2-ethyndiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, allein oder in Mischungen eingesetzt wird.

17. Polymere Zusammensetzung nach mindestens einem der Ansprüche 1 bis 16,
**dadurch gekennzeichnet,**
**dass** ein Duroplast aus IPDI, HDI-Isocyanurat und Isophorondiamin (IPD) enthalten ist.

18. Polymere Zusammensetzung nach mindestens einem der Ansprüche 1 bis 16,
**dadurch gekennzeichnet,**
**dass** ein Duroplast aus dem Isocyanurat des IPDI und IPD enthalten ist.

19. Polymere Zusammensetzung nach mindestens einem der Ansprüche 1 bis 16,
**dadurch gekennzeichnet,**
**dass** ein Duroplast aus einem Gemisch von IPDI und IPDI-Isocyanurat und IPD enthalten ist.

20. Polymere Zusammensetzung nach mindestens einem der Ansprüche 1 bis 16,
**dadurch gekennzeichnet,**
**dass** ein Duroplast aus IPDI-Isocyanurat, HDI und IPD enthalten ist.

21. Polymere Zusammensetzung nach mindestens einem der Ansprüche 1 bis 16,
**dadurch gekennzeichnet,**
**dass** ein Duroplast aus einem Gemisch von HDI und HDI-Isocyanurat und IPD enthalten ist.

22. Polymere Zusammensetzung nach mindestens einem der Ansprüche 1 bis 16,
**dadurch gekennzeichnet,**
**dass** ein Duroplast aus einem Gemisch von IPDI- und HDI-Isocyanurat und IPD enthalten ist.

23. Polymere Zusammensetzung nach mindestens einem der Ansprüche 1 bis 16,
**dadurch gekennzeichnet,**
**dass** ein Duroplast aus einem Gemisch von IPDI und IPDI-Isocyanurat und HDI und HDI-Isocyanurat enthalten ist.

24. Polymere Zusammensetzung nach mindestens einem der Ansprüche 1 bis 23,
**dadurch gekennzeichnet,**
**dass** die Umsetzung zum Duroplast in einem NCO/NH₂-Verhältnis von 0,8 bis 1,2 zu 1 erfolgt.

25. Polymere Zusammensetzung nach mindestens einem der Ansprüche 1 bis 24,
**dadurch gekennzeichnet,**
**dass** der Duroplast eine Molmasse von mindestens 4000 aufweist und mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat.

26. Polymere Zusammensetzung nach mindestens einem der Ansprüche 1 bis 25,
**dadurch gekennzeichnet,**
**dass** 2 bis 30 Gew.-% Duroplast, insbesondere 3 bis 20 Gew.-%, in der polymeren Zusammensetzung, insbesondere im OH-haltigem Polyester und Polyacrylat, enthalten sind.

27. Verwendung der polymeren Zusammensetzung nach mindestens einem der vorherigen Ansprüche als Hauptkomponente, Basiskomponente oder Zusatzkomponente in Applikationen in Beschichtungsmittel, Klebstoffen und Dicht- und Dämmstoffen.

28. Verfahren zur Herstellung einer polymeren Zusammensetzung, im Wesentlichen enthaltend
A) mindestens ein Polymer,
B) mindestens ein Duroplast in Mengen von 0,5 bis 50 Gew.-%, bezogen auf die Summe von A und B,
hergestellt durch Reaktion in der Polymermatrix A aus
1) mindestens einer Ausgangskomponente mit NH₂-Gruppen
und
2) mindestens einer Ausgangskomponente mit NCO-Gruppen,
wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist,
in der Schmelze oder im Lösemittel.
